# EUROPEAN PATENT APPLICATION

(11) **EP 4 300 884 A1**
(43) Date of publication of application: **03.01.2024**
(21) Application number: 22182351.1
(22) Date of filing: 30.06.2022
(51) Int. Cl.: H04L 9/40, H04L 67/56

(54) **METHOD FOR ALLOWING A TERMINAL EQUIPMENT COMMUNICATIVELY CONNECTED TO A LAN TO ACCESS DATA, CORRESPONDING COMPUTER PROGRAM PRODUCT AND DEVICES**

(71) Applicant: Nagravision Sarl, 1033 Cheseaux-sur-Lausanne (CH)
(72) Inventor: MEYNET, Nicolas, 1033 CHESEAUX-SUR-LAUSANNE (CH)
(74) Representative: Ipside

(57) **Abstract**

A method is proposed for allowing a terminal equipment communicatively connected to a LAN to access data provided by at least one applicative device in communication with the LAN Such method comprises:
- generating (S300) an authentication key based on information representative of characteristics of the LAN;
- for the at least one applicative device, populating (S310) credentials on the applicative device, the credentials comprising the authentication key;
- for at least one given applicative device wherein credentials have been populated, authenticating (S320) with the given applicative device using the credentials, the access to the data provided by the given applicative device being allowed to the terminal equipment when at least the authenticating is successful.

## Description

### 1. FIELD OF THE DISCLOSURE

The field of the disclosure is that of the communications networks.

More specifically, the disclosure relates to a method for allowing a terminal equipment to access data provided by an applicative device, in particular when the communications link between the terminal equipment and the applicative device goes through a local area network (LAN).

The disclosure can be of interest in any field wherein such configuration occurs. This is the case for instance for terminals equipment like smartphones, tablets, etc. when connected to a LAN at home and accessing to such applicative devices (e.g. a server of a content provider or of a cloud storage, or a home applicative equipment such as a security camera).

### 2. TECHNOLOGICAL BACKGROUND

In the sequel, we focus more particularly on describing an existing problem in the field of LAN implemented at home. The invention is of course not limited to this particular field of application, but is of interest for any kind of LAN, whatever the location of the LAN.

When at home, it's always painful to log-in on all the different services a user wants to access. Such log-in may be e.g. to access a pay-tv service, or to connect to a Wi-Fi router e.g. to change the parental control, or to connect to a game console store, or to access a cloud storage, etc. As users become more and more connected and have more and more devices and services, this is really a painful point for all families.

Moreover, different users belonging to a same family often share the same credentials to connect to services, thus degrading the security strength associated to those credentials.

Furthermore, some of the services used require more security protection than others. This is the case e.g. to connect to a bank website or to an office VPN. However, existing methods like Multi-Factor Authentication (MFA) are painful for the users.

There is thus a need for a method that simplifies the connection to services for users when they are e.g. at home. It is preferable that such method allows improving the security protection to connect to some services while simplifying the overall connection process.

### 3. SUMMARY

A particular aspect of the present disclosure relates to a method for allowing a terminal equipment communicatively connected to a LAN to access data provided by at least one device, named applicative device, in communication with the LAN. According to such method, an electronic device communicatively connected to the LAN executes the following steps:
- generating an authentication key based on information representative of characteristics of the LAN;
- for said at least one applicative device, populating credentials on the applicative device, the credentials comprising the authentication key;
- for at least one given applicative device wherein credentials have been populated, authenticating with the given applicative device using the credentials, the access to the data provided by the given applicative device being allowed to the terminal equipment when at least the authenticating is successful.

Thus, the present disclosure proposes a new and inventive solution for allowing a terminal equipment (e.g. a smartphone, a tablet, a personal computer, etc.) to access data provided by applicative devices (e.g. a server of a content provider or an applicative equipment such as a security camera), in particular when the communications link between the terminal equipment and the applicative devices goes through a LAN.

More particularly, the proposed solution relies on the characteristics of the LAN for generating an authentication key, that acts e.g. as a password for the credentials populated in the different applicative devices. Thus, once the LAN is authenticated with the applicative devices using the authentication key, any terminal equipment that can connect to the LAN can in turn access to data provided by the applicative devices. This simplifies the connection to services for users when they connect through a usual LAN, e.g. when the LAN is implemented at home.

Further, this mechanism for authentication can be cumulative with other authentication methods for having the terminal equipment that authenticates to a given service provided by an applicative device. The present method thus allows improving the security protection to connect to some services while simplifying the overall connection process.

In some embodiments, the characteristics of the LAN belongs to the group comprising:
- a topology of the LAN;
- a geographical location of the LAN;
- a size of the LAN based on the number of devices communicatively connected to the LAN;
- at least one category of a device communicatively connected to the LAN;
- all or part of the MAC addresses of the devices communicatively connected to the LAN;
- at least one characteristic of a Wi-Fi protocol implemented by the LAN; and
- data consumption characteristic based on the average data or the peak data transferred over the LAN.

In some embodiments, the step of authenticating with the given applicative device comprises the following steps:
- reading the authentication key from a memory of the electronic device; or
- reading the information representative of characteristics of the LAN from a memory of the electronic device and generating again the authentication key based on the information read from the memory.

Having the authentication key stored in a memory of the electronic device allows saving computer load each time the authentication key needs to be used. However, having the authentication key that is not stored persistently in a memory of the electronic device allows improving the security of the system. Indeed, in this later case, the authentication key cannot be read by a third-party device attempting an attack for retrieving credentials within the electronic device executing the present method.

In some embodiments, the information representative of characteristics of the LAN comprises a plurality of digital information representing each a characteristic of the LAN. The step of generating comprises the following steps:
- aggregating the digital information delivering an aggregated digital information; and
- applying a one-way function to the aggregated digital information delivering an encrypted digital information.
The authentication key is based on the encrypted digital information.

In some embodiments, the information representative of characteristics of the LAN is updated when a predetermined criterion representative of an effective change in the characteristics of the LAN is fulfilled. The step of generating is executed again delivering an updated authentication key based on the updated information. The step of populating credentials is executed again, the credentials comprising the updated authentication key. The step of authenticating is executed again using the credentials comprising the updated authentication key.

In some embodiments, the fulfilled predetermined criterion belongs to the group comprising:
- a variation, over a predetermined period of time, in a number of devices connected to the LAN, higher than a predetermined number;
- a change in a communication protocol implemented in the LAN.

In some embodiments, the step of populating comprises the following steps:
- sending the authentication key to the applicative device; or
- sending the authentication key to a backend server for allowing the backend server to forward the authentication key to the applicative device.

In some embodiments, the electronic device executes an additional security check. The access to the data provided by the given applicative device is allowed to the terminal equipment when at least one of the following conditions is also met:
- the electronic device receives an input command indicative of the terminal equipment being a trusted device;
- the electronic device checks that a trusted device is effectively communicatively connected to the LAN; and
- the electronic device checks that the terminal equipment has performed a successful additional authentication with the given applicative device.

In some embodiments, the given applicative device is communicatively connected to a router of the LAN.

In some embodiments, the given applicative device is communicatively connected to the LAN through a communications network implementing an internet protocol and in communication with a gateway of the LAN.

In some embodiments, the electronic device is implemented in a router or in a gateway of the LAN.

Another aspect of the present disclosure relates to a computer program product comprising program code instructions for implementing the above-mentioned method for allowing a terminal equipment to access data provided by applicative devices (in any of the different embodiments discussed above), when said program is executed on a computer or a processor.

Another aspect of the present disclosure relates to an electronic device configured for implementing all or part of the steps of the above-mentioned method for allowing a terminal equipment to access data provided by applicative devices (in any of the different embodiments discussed above). Thus, the features and advantages of this device are the same as those of the corresponding steps of said method. Therefore, they are not detailed any further.

Another aspect of the present disclosure relates to a gateway comprising an electronic device as discussed above (in any of the different embodiments discussed above).

### 4. LIST OF FIGURES

Other features and advantages of embodiments shall appear from the following description, given by way of indicative and non-exhaustive examples and from the appended drawings, of which:
- Figure 1 illustrates a terminal equipment communicatively connected to a LAN and in communication with applicative devices according to one embodiment of the present disclosure;
- Figure 2 illustrates an example of the structural blocks of an electronic device allowing all or part of the steps of the method of Figure 3 to be executed by the gateway of Figure 1;
- Figure 3 illustrates the steps of a method for allowing the terminal equipment of Figure 1 to access data provided by applicative devices according to one embodiment of the present disclosure;
- Figure 3a illustrates the steps executed during the step of generation of the authentication key of the method of Figure 3 according to one embodiment of the present disclosure.

### 5. DETAILED DESCRIPTION

In all of the Figures of the present document, the same numerical reference signs designate similar elements and steps.

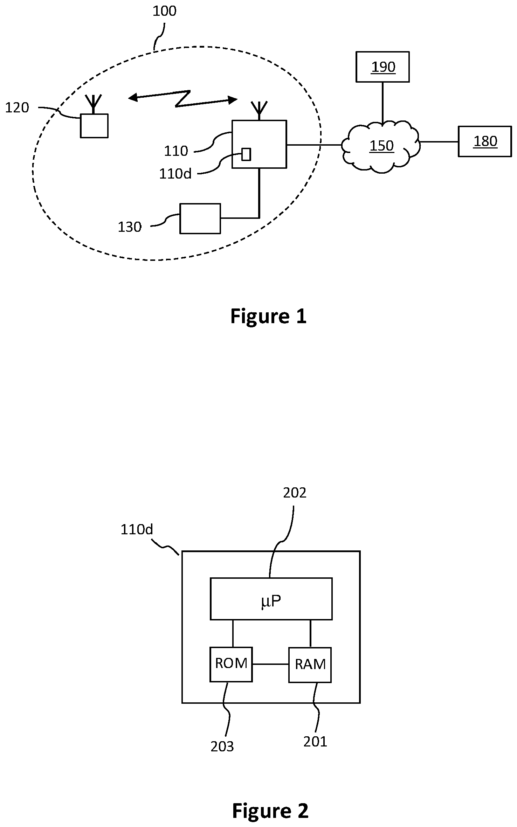

Referring now to **Figure 1**, we describe a terminal equipment 120 communicatively connected to a LAN 100 and in communication with applicative devices 130, 190 according to one embodiment of the present disclosure.

More particularly, the terminal equipment 120 (e.g. a smartphone, a tablet or a personal computer equipped with a wireless communications module, etc.) is communicatively connected to the LAN 100 through a wireless communications link established with a gateway 110 of the LAN 100. In the present case, the wireless communications link implements a WiFi protocol.

However, in some embodiments other types of wireless protocols are considered for the wireless communications link between the terminal equipment 120 and the gateway 110, e.g. a LoRa protocol, a ZigBee protocol, a Bluetooth protocol, a cellular protocol (e.g. a third Generation Partnership Project, hereafter 3GPP, 2G, 3G, 4G or 5G protocol), etc. Alternatively, in some embodiments, the terminal equipment 120 is communicatively connected to the LAN 100 through a wired communications link with the gateway 110. The wired communications link implements e.g. an ethernet protocol.

Back to Figure 1, the gateway 110 is communicatively connected to an external communications network 150. For instance, the communications link between the gateway 110 and the communications network 150 goes through a wired connection, e.g. a xDSL communications link. Such wired communications link implements for instance an internet protocol.

However, in some embodiments, the communications link between the gateway 110 and the communications network 150 goes through a wireless communications link, e.g. based on a cellular protocol (e.g. a 3GPP 2G, 3G, 4G or 5G protocol) or on a WiMAX protocol.

Back to Figure 1, the applicative device 130 (e.g. a home security camera wherein credentials are required to access to the video recorded by the camera) is communicatively connected to the LAN 100. Such connection may be implemented through a wired or through a wireless communications link of the type discussed above in relation with the connection between the terminal equipment 120 and the gateway 110. As a result, a direct communications link is established between the applicative device 130 and the gateway 110 (or the router) of the LAN 100.

Alternatively, the applicative device 190 (e.g. a server of a content provider (e.g. a pay TV provider), a game console store server, a cloud storage server, etc.) is communicatively connected to the communications network 150 the gateway 110 is connected to. In other words, the applicative device 190 is indirectly communicatively connected to the gateway 110 of the LAN 100, i.e. going through the communications network 150 before reaching the gateway 110.

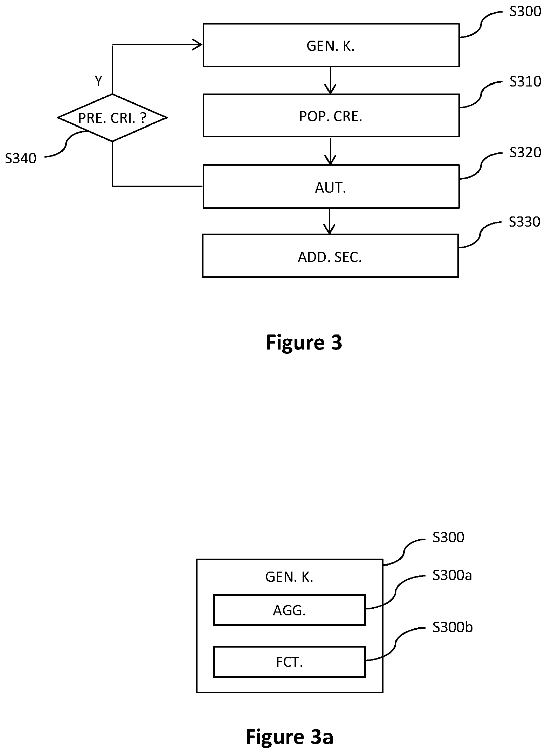

In view of the above, the terminal equipment 120, communicatively connected to the LAN 100, is thus communicatively connected to the applicative device 130 and the applicative device 190. The terminal equipment 120 can thus theoretically access data provided by those applicative devices 130, 190. However, according to the present disclosure, for this to be possible the gateway 110 comprises an electronic device 110d that implements means allowing such access. More particularly, referring to **Figure 2****,** in order to be able to implement all or part of the steps of the method discussed below (method for allowing a terminal equipment communicatively connected to a LAN to access data) in the various embodiments disclosed in relationship with Figure 3, in some embodiments the device 110d comprises:
- a non-volatile memory 203 (e.g. a read-only memory (ROM), a hard disk, a flash memory, etc.);
- a volatile memory 201 (e.g. a random-access memory or RAM) and a processor 202.

The non-volatile memory 203 is a non-transitory computer-readable carrier medium. It stores executable program code instructions, which are executed by the processor 202 in order to enable implementation of some steps of the method described below (method for allowing a terminal equipment communicatively connected to a LAN to access data) in the various embodiments disclosed below in relationship with Figure 3.

Upon initialization, the aforementioned program code instructions are transferred from the non-volatile memory 203 to the volatile memory 201 so as to be executed by the processor 202. The volatile memory 201 likewise includes registers for storing the variables and parameters required for this execution.

The steps of the method for allowing a terminal equipment communicatively connected to a LAN to access data may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a CD-ROM, a DVD-ROM, a USB key) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

Back to Figure 1, a backend server 180 (e.g. a server of a service provider that manages the access to data on various applicative devices) is communicatively connected to the communications network 150. The gateway 110 is thus communicatively connected to the backend server 180. As discussed below in relation with Figure 3, in some embodiments the backend server 180 is involved in the method according to the present disclosure. For instance, the backend server 180 receives an authentication key from the electronic device 110d and forwards the authentication key to the applicative device 190 during the step of populating credentials, e.g. in the applicative device 190.

However, in some embodiments, there is no backend server 180 and the electronic device 110d executes all the actions of the method discussed below in relation with Figure 3.

Further, in the embodiment of Figure 1, two applicative devices 130, 190 are considered. However, the present technic is not limited to this particular number of applicative devices. In other words, any number of applicative devices may be considered as long as they are communicatively connected to the LAN 100.

In the embodiment of Figure 1, the terminal equipment 120 is communicatively connected to the LAN 100 through a communications link with the gateway 110. However, in some embodiments, the terminal equipment 120 is communicatively connected to the LAN 100 through a communications link with a router of the LAN 100. Such connection may be implemented through a wired or through a wireless communications link of the type discussed above in relation with the connection between the terminal equipment 120 and the gateway 110. The router may be in turn in communication with the gateway 110 of the LAN 100. In such embodiments, the electronic device 110d can be implemented in the router instead of in the gateway 110. Alternatively, the electronic device 110d can still be implemented in the gateway 110 even when the terminal equipment 120 is communicatively connected to the LAN 100 through a wireless or a wired communications link with a router.

Referring now to **Figure 3**, we describe a method for allowing the terminal equipment 120 to access data provided by applicative devices, e.g. the applicative device 130 and/or the applicative device 190, according to one embodiment of the present disclosure.

More particularly, in a **step S300**, the electronic device 110d generates an authentication key based on information representative of characteristics of the LAN 100. For instance, such characteristics of the LAN 100 belongs to the group comprising:
- a topology of the LAN 100. This can include for instance information representative of a multi-network (guest, private, internet of things, hereafter loT, etc.), of the switches implemented in the LAN 100, of the type of connection used in the LAN 100 (ethernet, Wi-Fi, loT);
- a geographical location of the LAN 100;
- a size of the LAN 100 based on the number of devices communicatively connected to the LAN 100, e.g. during a given period of time. For instance, the gateway 110 knows the range of connected devices over the LAN 100 (e.g. during a regular week/day we have between 18-22 connected devices connected on this LAN 100);
- at least one category of a device communicatively connected to the LAN 100. This can include for instance: gaming console, projector, medical, firewall, robotic, storage loT, etc.;
- all or part of the MAC addresses of the devices communicatively connected to the LAN 100;
- at least one characteristic of a Wi-Fi protocol implemented by the LAN 100. This can include for instance: SSID, security protocol (WEP/WPA/WPA2/WPA3), Wi-Fi 5/6/7, technology A/B/G/N/AC, etc.; and
- data consumption characteristic based on the average data or the peak data transferred over the LAN 100.

For instance, referring to the embodiment of **Figure 3a**, when the information representative of characteristics of the LAN 100 comprises a plurality of digital information representing each a characteristic of the LAN 100, the step S300 comprises:
- a **step S300a** wherein the electronic device 110d aggregates the digital information delivering an aggregated digital information; and
- a **step S300b** wherein the electronic device 110d applies a one-way function (e.g. a hash function or a Rabin function) to the aggregated digital information delivering an encrypted digital information.

The authentication key is based on the encrypted digital information, e.g. the authentication key comprises the encrypted digital information.

However, in some embodiments, other technics are implemented for the generation of the authentication key based on the information representative of characteristics of the LAN 100. For instance, a one-way function is applied to each digital information representing a respective characteristic of the LAN 100, delivering corresponding elementary encrypted digital information. The authentication key may be based on an aggregation of the elementary encrypted digital information. Alternatively, the authentication key may be based on an output of a given one-way function applied to an aggregation of the elementary encrypted digital information. Depending on the implementations, the one-way functions may be a same one-way function or different one-way functions applied to each digital information representing a respective characteristic of the LAN 100.

Back to Figure 3, in a **step S310**, the electronic device 110d populates credentials on applicative devices communicatively connected to the LAN 100, e.g. on the applicative device 130 and/or the applicative device 190. The credentials comprise the authentication key.

For instance, in some embodiments, during the step S310 the electronic device 110d sends the authentication key to all or part of the applicative devices. This is the case for instance for the applicative device 130 that is in communication with the gateway 110 the electronic device 110d is part of through a direct communications link.

Alternatively, in other embodiments, during the step S310 the electronic device 110d sends the authentication key to the backend server 180, thus allowing the backend server to forward the authentication key to all or part of the applicative devices, e.g. to the applicative device 190. In that case, the service provider is able to manage directly the applicative devices the terminal equipment 120 can access to.

Back to Figure 3, in a **step S320**, for at least one given applicative device wherein credentials have been populated (e.g. the applicative device 130 and/or the applicative device 190), the electronic device 110d authenticates with the given applicative device using the credentials. The access to the data provided by the given applicative device is allowed to the terminal equipment 120 when at least the authenticating is successful. Indeed, having the gateway 110 (or the router in corresponding embodiments discussed above in relation with Figure 1) that manages the communications in the LAN 100, the gateway 110 can allow or not the terminal equipment 120 accessing to the data of the applicative devices in communication with the LAN 100 depending on the result of the step S320 of authenticating.

More particularly, for proceeding with the authentication during the step S320, in some embodiments the electronic device 110d reads the authentication key from a memory 201 of the electronic device 110d. Alternatively, in some embodiments the electronic device 110d reads the information representative of characteristics of the LAN 100 from a memory 201 of the electronic device 110d and generates again the authentication key based on the information read from the memory 201.

Indeed, having the authentication key stored in a memory 201 of the electronic device 110d allows saving computer load each time the authentication key needs to be used. However, having the authentication key that is not stored persistently in the memory 201 of the electronic device 110d allows improving the security of the system. Indeed, in this later case, the authentication key cannot be read by a third-party device attempting an attack for retrieving credentials within the electronic device 110d executing the present method.

Reconsidering the steps S300, S310 and S320 detailed above, we observe that the proposed solution relies on the characteristics of the LAN 100 for generating an authentication key, that acts e.g. as a password for the credentials populated in the different applicative devices (e.g. the applicative device 130 and/or the applicative device 190). Thus, once the LAN 100 is authenticated with the applicative devices using the authentication key, any terminal equipment (e.g. the terminal equipment 120) that can connect to the LAN 100 can in turn access to data provided by the applicative devices. This simplifies the connection to services for users when they connect through a usual LAN. This is the case e.g. when the LAN 100 is implemented at home.

Back to Figure 3, in a **step S330,** the electronic device 110d executes an additional security check for allowing access to the data provided by the given applicative device (e.g. the applicative device 130 and/or the applicative device 190). More particularly, the access to the data provided by the given applicative device is allowed to the terminal equipment 120 when at least one of the following conditions is also met:
- the electronic device 110d receives an input command indicative of the terminal equipment 120 being a trusted device. For instance, such input command may be entered by a user on input means (e.g. a touch screen) of the terminal equipment 120, e.g. through a dedicated application running on the terminal equipment 120;
- the electronic device 110d checks that a trusted device is effectively communicatively connected to the LAN 100. Such trusted device may be e.g. a dongle connected to an equipment such as the gateway 110 or a router or a set-top box communicatively connected to the LAN 100; and
- the electronic device 110d checks that the terminal equipment 120 has performed a successful additional authentication with the given applicative device.

Thus, the mechanism for authentication according to the present disclosure can be cumulative with other authentication methods for having the terminal equipment 120 that authenticates to the given applicative device. The present method thus allows improving the security protection to connect to some services while simplifying the overall connection process.

However, in some embodiments, the step S330 is not implemented and no additional security check is executed.

Back to Figure 3, in a **step S340,** the electronic device 110d checks if a predetermined criterion representative of an effective change in the characteristics of the LAN 100 is fulfilled. For instance, such predetermined criterion may be considered fulfilled when a variation, over a predetermined period of time, in a number of devices connected to the LAN 100 is higher than a predetermined number. Alternatively, the predetermined criterion may be considered fulfilled when a change occurs in a communication protocol implemented in the LAN 100. In other words, such predetermined criterion, when fulfilled, is representative of a change in the characteristics of the LAN 100 important enough in view of the security aspects of the access to the data provided by the applicative devices in communication with the LAN 100. Thus, when the predetermined criterion is fulfilled, the authenticating aspects for accessing to the data provided by the applicative devices are updated, i.e.:
- the information representative of characteristics of the LAN 100 is updated based on the new characteristics of the LAN 100;
- the step S300 is executed again based on the updated information delivering an updated authentication key;
- the step S310 is executed again, the credentials comprising the updated authentication key, for populating the applicative devices communicatively connected to the LAN 100;
- the step S320 is executed again using the credentials comprising the updated authentication key.

However, in some embodiments, the step S340 is not implemented and the credentials remain the same despites changes in the characteristics of the LAN 100.

## Claims

1. Method for allowing a terminal equipment (120) communicatively connected to a local area network (100), hereafter LAN, to access data provided by at least one device (130, 190), named applicative device, in communication with the LAN, **characterized in that** an electronic device (110d) communicatively connected to the LAN executes:
- generating (S300) an authentication key based on information representative of characteristics of the LAN;
- for said at least one applicative device, populating (S310) credentials on the applicative device, the credentials comprising the authentication key;
- for at least one given applicative device wherein credentials have been populated, authenticating (S320) with the given applicative device using the credentials, the access to the data provided by the given applicative device being allowed to the terminal equipment when at least the authenticating is successful.

2. Method according to claim 1, wherein the characteristics of the LAN belongs to the group comprising:
- a topology of the LAN;
- a geographical location of the LAN;
- a size of the LAN based on the number of devices communicatively connected to the LAN;
- at least one category of a device communicatively connected to the LAN;
- all or part of the MAC addresses of the devices communicatively connected to the LAN;
- at least one characteristic of a Wi-Fi protocol implemented by the LAN; and
- data consumption characteristic based on the average data or the peak data transferred over the LAN.

3. Method according to claim 1 or 2, wherein said authenticating with the given applicative device comprises:
- reading the authentication key from a memory of the electronic device; or
- reading the information representative of characteristics of the LAN from a memory of the electronic device and generating again the authentication key based on the information read from the memory.

4. Method according to any of the claims 1 to 3, wherein the information representative of characteristics of the LAN comprises a plurality of digital information representing each a characteristic of the LAN,
and wherein said generating comprises:
- aggregating (S300a) the digital information delivering an aggregated digital information; and
- applying (S300b) a one-way function to the aggregated digital information delivering an encrypted digital information,
the authentication key being based on the encrypted digital information.

5. Method according to any of the claims 1 to 4, wherein said information representative of characteristics of the LAN is updated when a predetermined criterion representative of an effective change in the characteristics of the LAN is fulfilled (S340), said generating being executed again delivering an updated authentication key based on the updated information,
said populating credentials being executed again, the credentials comprising the updated authentication key,
said authenticating being executed again using the credentials comprising the updated authentication key.

6. Method according to claim 5, wherein the fulfilled predetermined criterion belongs to the group comprising:
- a variation, over a predetermined period of time, in a number of devices connected to the LAN, higher than a predetermined number;
- a change in a communication protocol implemented in the LAN.

7. Method according to any of the claims 1 to 6, wherein said populating comprises:
- sending said authentication key to the applicative device; or
- sending said authentication key to a backend server (180) for allowing the backend server to forward the authentication key to the applicative device.

8. Method according to any of the claims 1 to 7, wherein the electronic device executes an additional security check (S330), the access to the data provided by the given applicative device being allowed to the terminal equipment when at least one of the following conditions is also met:
- the electronic device receives an input command indicative of the terminal equipment being a trusted device;
- the electronic device checks that a trusted device is effectively communicatively connected to the LAN; and
- the electronic device checks that the terminal equipment has performed a successful additional authentication with the given applicative device.

9. Method according to any of the claims 1 to 8, wherein:
- the given applicative device is communicatively connected to a router of the LAN; or
- the given applicative device is communicatively connected to the LAN through a communications network (150) implementing an internet protocol and in communication with a gateway of the LAN.

10. Method according to any of the claims 1 to 9, wherein the electronic device is implemented in a router or in a gateway (110) of the LAN.

11. Computer program product **characterized in that** it comprises program code instructions for implementing a method according to any of the claims 1 to 10.

12. Electronic device for allowing a terminal equipment (120) communicatively connected to a local area network (100), hereafter LAN, to access data provided by at least one device (130, 190), named applicative device, in communication with the LAN, **characterized in that** it comprises a processor (202) or a dedicated computing machine configured for:
- generating an authentication key based on information representative of characteristics of the LAN;
- for said at least one applicative device, populating credentials on the applicative device, the credentials comprising the authentication key;
- for at least one given applicative device wherein credentials have been populated, authenticating with the given applicative device using the credentials, the access to the data provided by the given applicative device being allowed to the terminal equipment when at least the authenticating is successful.

13. Gateway comprising an electronic device according to claim 12.
